# EUROPEAN PATENT SPECIFICATION

(11) **EP 1 522 184 B1**
(45) Date of publication and mention of the grant of the patent: **23.01.2008**
(21) Application number: 03762475.6
(22) Date of filing: 03.07.2003
(51) Int. Cl.: H04M 1/00, H04M 1/725

(54) **WIRELESS COMMUNICATION SYSTEMS.**
DRAHTLOSE KOMMUNIKATIONSSYSTEME
SYSTEMES DE COMMUNICATION SANS FIL

(30) Priority: 04.07.2002 DK 200201050
(43) Date of publication of application: 13.04.2005
(73) Proprietor: Sennheiser Communications A/S, 2680 Solroed Strand (DK)
(72) Inventor: GOVAERTS, Rene; c/o Sennheiser Communications A/S, DK-2680 Solrod Strand (DK)
(74) Representative: Nielsen, Hans Jörgen Vind
(86) International application number: PCT/DK2003/000471
(87) International publication number: WO 2004/006547

(56) References cited:
- EP-A- 0 892 533
- EP-A- 0 935 377
- EP-A- 1 158 754

## Description

### AREA OF THE INVENTION

The invention relates to communication systems. More specifically the invention relates to telephone system extensions for wireless connection of a headset to a communication line.

### BACKGROUND OF THE INVENTION

Such systems are well known and available on the market. The systems most often finds use in connection with stationary telephone systems where a user requires the ability of moving around within a certain distance from the telephone and maintain in connection with the open telephone line. It is obvious that such systems preferably are wireless, i.e. there are no wires connecting the user to the telephone system. By using a wireless system the users freedom of movement is maintained, while at the same time maintaining the connection to the phone line.

Such wireless systems require a portable power source, usually a battery, for supplying the necessary operation power to a transmit/receive system, which must be present in such portable part of a wireless system. The stationary part of such system is supplied through the connection to a usual permanent power supply.

It is obvious that a battery only will be able to supply the necessary power for a limited period of time. In the systems known today the user can therefore be forced to replace the batteries of the portable transmitter/receiver or to place this in a charging device in case a rechargeable battery is present. Most of the devices known today comprise a rechargeable battery due to the fact that this will provide the best operational value during the lifetime of such products. In case the portable device must be placed in the charging device there is no possibility of using this during the time of charging. A possibility does exist in changing the battery in the device, however this is a complicated and undesired process.

EP-A-1 158 754 is considered as the closest prior art. It describes a modular cordless phone consisting of a base unit, a mobile telephone and a cordless unit. The mobile telephone includes a transceiver for cordless telephony and an interface for connecting to the base unit. A telephone call from the cordless phone can be transmitted through the mobile phone and the base unit to the PSTN. The base unit further includes facilities for charging the battery of the mobile phone and the cordless phone.

The objective of the present invention is to provide improvement to the disadvantages mentioned in connection with the above mentioned previously known devices.

### SUMMARY OF THE INVENTION

According to the invention the objective of the present invention is achieved by means of the system as defined in claim 1.

By means of such system one unit may be connected to the communication line, e.g. a telephone system, and another unit may be connected to an input/output device, e.g. a headset, hereby being able to provide a significant reduction of the time necessary for changing the status of the two input/output units and hence providing a solution through which the user by simple changing of connections may maintain the possibility of wireless communication and the advantages of being able to physically move around.

The changing operation especially facilitated when a base station is provided for holding the input/output unit. The requirement is simply changing the portable input/output unit with the stationary input/output unit, i.e. removing the unit stationary placed in base station, plugging the input/output device, e.g. a headset, into this and placing the second input/output unit in need of recharging in the charging device. The system is fully operational after this procedure and the user will be able to maintain the wireless freedom during the entire working day.

Advantageously the base station comprises charging options for both units, hereby ensuring that a fully charged battery will be available when starting a working day without the need of making thorough investigations of the charging conditions of each unit.

The base station may comprise circuitry for controlling charging of a rechargeable battery in one or both input/output units. This circuitry may however be provided in each of the input/output units.

One or more of the connectors may be assembled in a single connector, e.g. a USB connector. Such connection could provide data communication connection and at the same time provide a charging voltage for charging the rechargeable battery.

Advantageously the input/output units are communicating with each other using a communication protocol allowing change of the receiver/transmitter status of these during operation. This reduces the needs for surveillance of the battery charging condition.

The invention further relates to an input/output unit for use in connection with a communication system according to any of the preceding claims and as defined in claim 8.

An input/output unit may comprise the same features as defined in connection with the communication system

The system may further find use as an intercom system, whereby the telephone system is disconnected from the one unit and a further headset is connected to this unit. The units may be used individually in connection with other devices having incorporated wireless communication receivers/transmitters and protocols allowing such communication.

The invention will be described more detailed in the following description of a preferred embodiment, with reference to the drawings.

### BRIEF DESCRIPTION OF THE DRAWINGS

FIG. 1 is a schematic drawing depicting the invention in a first state of operation;
FIG. 2 is a schematic drawing depicting the invention in a second state of operation;
FIG. 3 is a schematic drawing depicting the invention in a third state of operation;
FIG. 4 is a schematic drawing depicting the invention in a fourth state of operation;
FIG. 5 is a schematic drawing depicting the invention in a fifth state of operation;.

### DESCRIPTION OF A PREFERRED EMBODIMENT

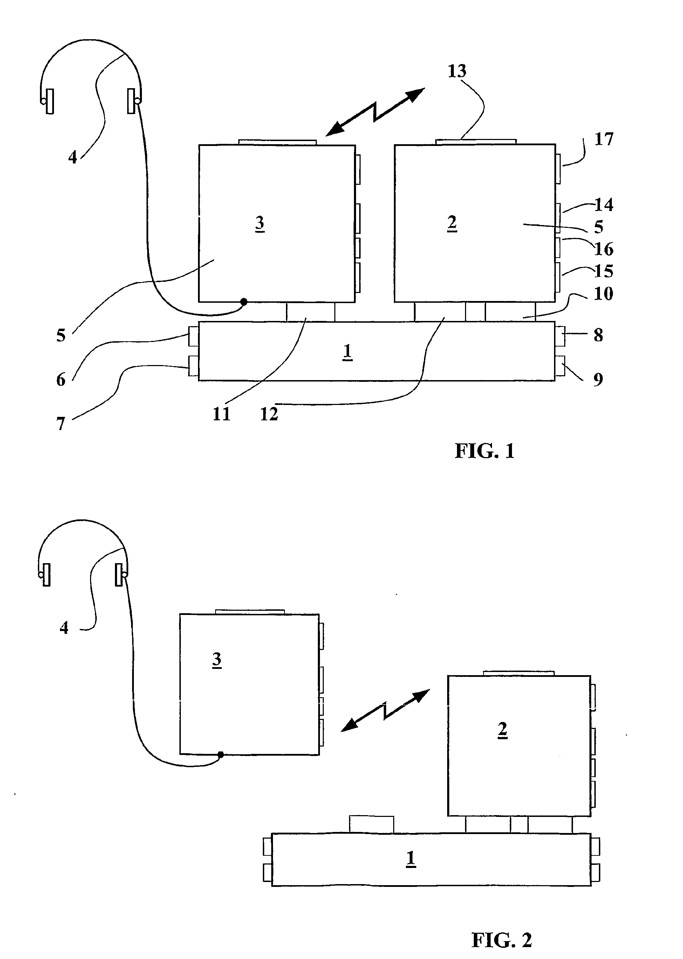

FIGS. 1-5 depicts the communication system comprising a base station 1 and two input/output units 2,3 and a headset 4 in different modes of operation, which will be explained more detailed in the following description. The arrow indicates wireless transmission of a signal, which may be an audio signal or a data signal.

Each unit 2,3 comprises a housing 5 holding the receiver and transmitter together with necessary communication protocols and controllers, a rechargeable battery for powering the unit during operation, connectors for providing charging voltage to the battery, for connection to a communication line interface in the base station and for connection of a headset. The housing holds operation button 13 for hook switching, volume up and down buttons 14, 15, a mute button 16 and a program switch 17 for switching between different program setting and for pairing the units.

The base station 1 comprises two charging connectors 10,11 and a communication line interface 12 to an input/output unit. This allows for charging both input/output units simultaneously. Besides this connectors 8,9 are provided for interface to communication lines, which may be through a conventional telephone device and/or a computer system. A charging voltage connector 7 is provided as well as an interface 6 for a handset.

The headset 4 used may be of any desired type. The fact that the relatively heavy battery and transmitter/receiver parts need not be placed on the head of the user but instead as a body worn package further improves the comfort of such wireless system.

From FIG. 1 a system appears, which comprises a base station with two input output units placed in connection with this. An output from the stationary telephone connects this to a base station of a wireless communication system. When a unit is placed in the charging cradle having the communication line interface this unit has the function of transmitter/receiver of the base station. In connection with a second unit a headset is provided and the second unit is hereby adapted for wireless connection of the headset with the telephone system, through the first unit placed in the charging cradle. As shown in this FIG. 1 the system may be used stationary while charging the batteries of both units.

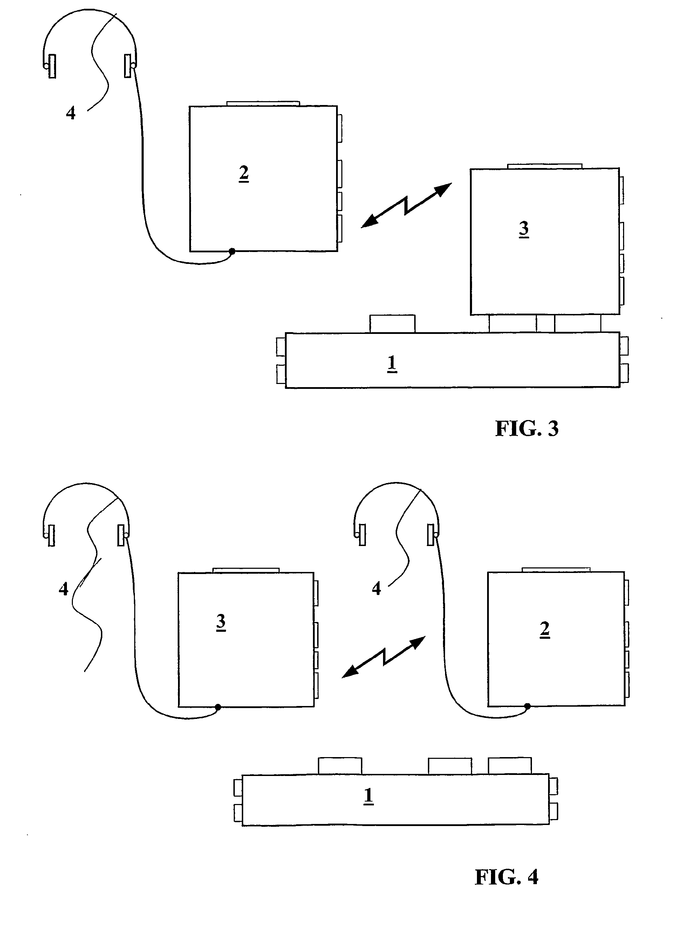

From Fig. 2 the system appears where one unit is removed from the base station in order to establish wireless connection to the telephone system. This wireless operation may be maintained for a time dependent on the battery capacity and the power consumption of the unit. When the battery requires charging the user may as indicated in FIG. 3 shift the first unit and the second unit and hereby have a charged unit available for continued wireless operation. The user will plug the headset into the charged unit and place the de-charged unit in the charging cradle. The user will be able to maintain wireless freedom during the working day. Advantageously the shift of the two units may take place during operation, i.e. during an on-going conversation, where this requires holding of the communication line during the shifting process. This may set certain requirements to the communication protocol if this is to be performed during wireless operation.

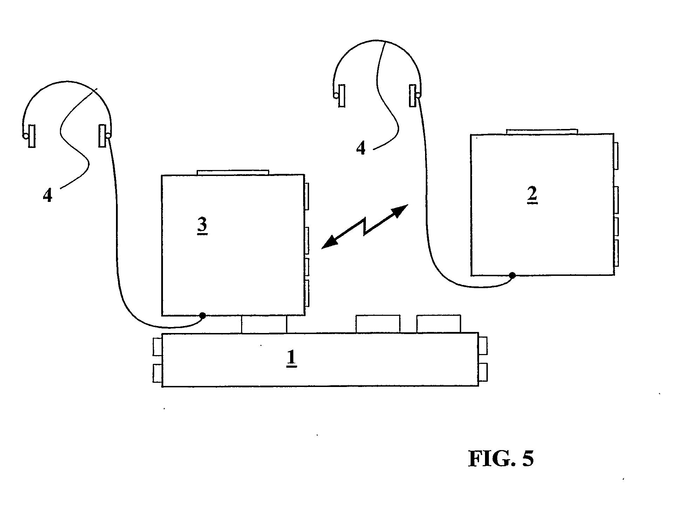

As shown in FIG. 4 and FIG. 5 the system allows use of the two input/output units for intercommunication. A headset is provided in connection with each unit. This may even take place during charging of one of the units, hereby of course only allowing wireless mobility for one of the two users.

## Claims

1. A communication system for use in connection with a stationary communication line, the communication system comprising two input/output units, each input/output unit comprising a first connector for connection of a communication line, a second connector for connection of an input/output device, a rechargeable battery and a third connector for connection of a charging voltage to the rechargeable battery, whereby the units comprise transmitters and receivers for communicating wireless a communication line signal in one direction from a first input/output unit to a second input/output unit and in another direction from the second input/output unit a communication signal to the first input/output unit for input to the communication line, where the system comprises a base station adapted for receiving at least one of the units, where the base station provides connection to an external communication line and where the base station and the one input/output unit forms a wireless transmission base station communicating directly with the other input/output unit.

2. A communication system according to claim 1, where the system comprises a base station adapted for receiving at least two units.

3. A communication system according to any of the preceding claims, where the base station comprises circuitry for controlling charging of a rechargeable battery in one or both input/output units.

4. A communication system according to claim 1 or 2, where each of the input/output units comprises circuitry for controlling charging of a rechargeable battery in the unit.

5. A communication system according to any of the preceding claims, where a combined connector is provided in the input/output unit.

6. A communication system according to any of the preceding claims, where the input/output units are communicating with each other using a communication protocol allowing change of the receiver/transmitter status of these during operation.

## Patentansprüche

1. Kommunikationssystem zur Verwendung in Verbindung mit einem stationären Kommunikationsanschluss, mit
zwei Eingangs/Ausgangseinheiten, wobei jede Eingangs/Ausgangseinheit einen ersten Anschluss zum Anschließen an einen Kommunikationsanschluss, einen zweiten Anschluss zum Anschließen an eine Eingangs/Ausgangsvorrichtung, eine wiederaufladbare Batterie und einen dritten Anschluss zum Anschließen einer Ladespannung an die wiederaufladbare Batterie aufweist,
wobei die Einheiten Transmitter und Empfänger zur drahtlosen Kommunikation eines Kommunikationsleitungsanschlusses in einer Richtung von einer ersten Eingangs/Ausgangseinheit zu einer zweiten Eingangs/Ausgangseinheit und eines Kommunikationssignals in einer weiteren Richtung von der zweiten Eingangs/Ausgangseinheit zu der ersten Eingangs/Ausgangseinheit zur Eingabe an den Kommunikationsanschluss aufweist,
wobei das System eine Basisstation aufweist, welche dazu ausgestaltet ist, zumindest eine der Einheiten aufzunehmen, wobei die Basisstation eine Verbindung mit einem externen Kommunikationsanschluss vorsieht und wobei die Basisstation und die eine Eingangs/Ausgangseinheit eine Drahtlosübertragungs-Basisstation darstellt, welche direkt mit der anderen Eingangs/Ausgangseinheit kommuniziert.

2. Kommunikationssystem nach Anspruch 1, wobei das System eine Basisstation aufweist, welche zum Empfang von zumindest zwei Einheiten ausgestaltet ist.

3. Kommunikationssystem nach einer der vorherigen Ansprüche, wobei die Basisstation eine Schaltung zur Steuerung des Ladens einer wiederaufladbaren Batterie in einer oder beiden Eingangs/Ausgangseinheiten aufweist.

4. Kommunikationssystem nach Anspruch 1 oder 2, wobei jede der Eingangs/Ausgangseinheiten eine Schaltung zum Steuern des Ladens einer wiederaufladbaren Batterie in der Einheit aufweist.

5. Kommunikationssystem nach einem der vorherigen Ansprüche, wobei ein kombinierter Anschluss in der Eingangs/Ausgangseinheit vorgesehen ist.

6. Kommunikationssystem nach einem der vorherigen Ansprüche, wobei die Eingangs/Ausgangseinheiten miteinander unter Verwendung eines Kommunikationsprotokolls kommunizieren, welches eine Änderung des Empfänger/Transmitterstatus während dieser Operation ermöglicht.

## Revendications

1. Système de communication à utiliser en liaison avec une ligne de communication fixe, le système de communication comprenant deux unités d'entrée/sortie, où chaque unité d'entrée/sortie comprend un premier connecteur pour la connexion d'une ligne de communication, un deuxième connecteur pour la connexion d'un dispositif d'entrée/sortie, une batterie rechargeable et un troisième connecteur pour la connexion d'une tension de charge à la batterie rechargeable, les unités comprenant des émetteurs et des récepteurs pour permettre la communication sans fil d'un signal de ligne de communication dans une direction, de la première unité d'entrée/sortie vers la deuxième unité d'entrée/sortie, et dans une autre direction, de la deuxième unité d'entrée/sortie vers la première unité d'entrée/sortie, pour l'introduire sur la ligne de communication, le système comprenant une station de base adaptée pour recevoir au moins l'une des unités, où la station de base permet une connexion à une ligne de communication externe, et la station de base et ladite unité d'entrée/sortie forment une station de base de transmission sans fil communiquant directement avec l'autre unité d'entrée/sortie.

2. Système de communication selon la revendication 1, le système comprenant une station de base adaptée pour recevoir au moins deux unités.

3. Système de communication selon l'une quelconque des revendications précédentes, dans lequel la station de base comprend des circuits destinés à contrôler le chargement d'une batterie rechargeable dans l'une des deux ou dans les deux unités d'entrée/sortie.

4. Système de communication selon la revendication 1 ou 2, dans lequel chacune des unités d'entrée/sortie comprend des circuits destinés à contrôler le chargement d'une batterie rechargeable dans l'unité.

5. Système de communication selon l'une quelconque des revendications précédentes, dans lequel un connecteur combiné est prévu dans l'unité d'entrée/sortie.

6. Système de communication selon l'une quelconque des revendications précédentes, dans lequel les unités d'entrée/sortie communiquent entre elles à l'aide d'un protocole de communication qui permet l'inversion de leur état récepteur/émetteur pendant leur utilisation.
